# FASCICULE DE BREVET EUROPEEN

(11) **EP 0 718 216 B1**
(45) Date de publication et mention de la délivrance du brevet: **09.09.1998**
(21) Numéro de dépôt: 95402794.2
(22) Date de dépôt: 12.12.1995
(51) Int. Cl.: B65D 90/50, G01M 3/18

(54) **Procédés pour prévenir la corrosion de la cuve d'une citerne et citerne pour sa mise en oeuvre**
Verfahren zur Vermeidung von Korrosion einer Behälterwand und Behälter dafür
Method for preventing corrosion of a storage tank wall and storage tank therefor

(30) Priorité: 22.12.1994 FR 9415474
(43) Date de publication de la demande: 26.06.1996
(60) Demande divisionnaire: 96203087.0
(73) Titulaire: Société Metallurgique Liotard Frères, Société Anonyme, 75008 Paris (FR)
(72) Inventeur: Bouvier, Daniel, F-75011 Paris (FR)
(74) Mandataire: Eidelsberg, Victor Albert

(56) Documents cités:
- CH-A- 404 471
- CH-A- 471 016
- DE-A- 2 318 409
- FR-A- 1 551 051
- FR-A- 2 291 489
- PATENT ABSTRACTS OF JAPAN vol. 8, no. 68 (P-264) [1505] , 30 Mars 1984 & JP-A-58 215520 (TOKYO SHIBAURA DENKI K.K.), 15 Décembre 1983,
- PATENT ABSTRACTS OF JAPAN vol. 8, no. 72 (P-265) [1509] , 4 Avril 1984 & JP-A-58 219430 (HITACHI SEISAKUSHO K.K.), 20 Décembre 1983,

## Description

La présente invention concerne des procédés pour prévenir la corrosion de la cuve en un matériau corrodable d'une citerne, en particulier des citernes enterrées, ainsi que des citernes munies de dispositifs de contrôle de la cuve qui utilisent ces procédés.

On connaît des procédés et dispositifs de détection de fuite dans une citerne. Par exemple le brevet français n° 1 551 051 qui décrit une cuve qui comporte une peau interne, un détecteur de présence de liquide étant disposé sur la surface intérieure du fond de la cuve. Ce genre de dispositif présente l'inconvénient, d'une part, de ne pas protéger la surface extérieure de la cuve de la corrosion provenant de l'humidité à l'extérieur de la cuve et, d'autre part, ne permet pas de détecter l'apparition d'eau dès que celle-ci a lieu dans l'espace intermédiaire. Le document Patent Abstract of Japan, Vol. 8 Number 68 (page 264) du 30 mars 1984, décrit également une cuve entourée d'une paroi en béton, un évidement ayant été ménagé dans l'intervalle entre la paroi en béton et la cuve dans lequel est disposé un détecteur d'eau. Cependant, ce dispositif présente l'inconvénient de ne pas prévenir l'utilisateur de l'apparition d'humidité dès que celle-ci apparaît, mais, comme dans le cas du dispositif décrit au brevet français n° 1 551 051, uniquement après un certain temps pendant lequel la corrosion peut avoir déjà trop progressé.

On connaît un procédé de contrôle du bon état de la cuve d'une citerne enterrée, qui consiste à observer l'apparition d'une corrosion sur la paroi extérieure de la cuve à l'aide d'une caméra, dont les prises de vue sont transmises à un moniteur qui n'est pas enterré.

Ce procédé de l'art antérieur présente les inconvénients, d'une part d'être très coûteux et d'autre part de ne prévenir qu'après que la corrosion a eu lieu.

L'invention pallie les inconvénients de l'art antérieur par un procédé pour prévenir la corrosion de la cuve d'une citerne qui, tout en étant bien moins compliqué à mettre en oeuvre que le procédé antérieur, permet de prévenir l'utilisateur avant même que la corrosion de la citerne n'apparaisse et permet ainsi de conserver la citerne pendant une durée de vie quasiment illimitée.

Selon l'invention, le procédé consiste à détecter l'apparition d'eau qui se condense sur une partie de la surface extérieure du fond de la cuve. On a compris maintenant que, lorsque la cuve contient un liquide froid, par exemple du gaz de pétrole liquéfié, l'apparition d'eau qui s'est condensée est un signe avantcoureur d'une corrosion. En intervenant sur la cuve dès que ce signe apparaît, on est mieux à même de maintenir la cuve en bon état que si l'on attend pour intervenir l'apparition de la corrosion se traduisant par une fuite. Or, c'est sur la surface extérieure du fond de la cuve que l'humidité apparaîtra en premier, car c'est là que la température est la plus basse.

Un perfectionnement du procédé consiste d'une part à envelopper la surface extérieure du fond de la cuve ou une partie de cette surface d'une enveloppe étanche qui définit avec la surface extérieure du fond de la cuve, ou une partie de cette surface, une enceinte étanche que l'on remplit, par une entrée située sur l'enveloppe, d'un fluide anhydre (air, azote ou autre) et d'autre part à contrôler l'éventuelle apparition d'eau sur la partie de la surface extérieure du fond de la cuve. La surface extérieure est ainsi soumise à un milieu tel qu'il ne doit pas normalement pouvoir y apparaître d'humidité, cause d'apparition d'eau, signe avant-coureur de la corrosion et on contrôle qu'effectivement de l'eau n'apparaît pas. Si cependant, l'étanchéité de l'enveloppe venait à être défaillante et que de l'humidité parvenait à s'introduire dans l'enceinte censée être étanche, on peut intervenir avant que la corrosion ne s'établisse. Ce procédé permet de traduire le phénomène de corrosion à venir en une apparition d'eau, qui peut être mesurée par une grandeur physique simple telle qu'une intensité électrique.

L'invention vise également une citerne suivant la revendication 3.

L'enveloppe peut être un matériau non corrodable et résister moins à la pression que la cuve. Elle est notamment en matière plastique.

Pour mesurer dans l'atmosphère de l'enceinte, un taux d'humidité extrêmement faible, du fait des températures très basses qu'atteint la citerne en raison de l'évaporation du gaz liquéfié qu'elle contient, un perfectionnement de l'invention consiste à remplir l'enceinte étanche d'un fluide anhydre (air, azote par exemple), permettant ainsi de protéger la surface extérieure de la cuve de l'humidité ambiante dans l'enceinte étanche. On entend par fluide anhydre, un fluide qui ne contient pas d'eau liquide et dont la teneur en vapeur d'eau est trop faible pour qu'une condensation se produise.

L'invention vise aussi un détecteur suivant la revendication 17.

Afin de pouvoir mesurer des traces d'humidité, le détecteur de la citerne selon l'invention peut être constitué d'une couche de sel hygroscopique (chlorure, nitrate, sulfate de métal alcalin ou analogue) que l'on fixe sur la surface extérieure de la cuve par un moyen de fixation connu (colle, sertissage, etc ...) et avec laquelle on met en contact intime deux électrodes à distance l'une de l'autre en un matériau inoxydable (or, platine, ou analogue) ou plaquées avec un matériau de ce genre.

Le sel hygroscopique a une conductivité très faible sous forme cristallisée qui devient beaucoup plus grande lorsqu'il est en solution. Du courant électrique ne peut pas passer entre les deux électrodes tant que le sel hygroscopique est sous forme cristallisée. Lorsque de l'eau de condensation apparaît, le sel se solubilise et du courant peut passer entre les deux électrodes.

En reliant par deux conducteurs les électrodes à un moyen d'informations constitué d'un circuit électrique comprenant une source de courant électrique et un moyen de détection du passage du courant, on peut savoir que de l'eau de condensation est apparue.

Généralement, la cuve d'une citerne est en un matériau corrodable qui conduit l'électricité. Pour que du courant ne puisse pas passer entre les électrodes par l'intermédiaire de la cuve de la citerne, ont doit s'assurer, lorsqu'on monte les électrodes en contact intime avec la couche de sel, que cette couche de sel isole totalement les électrodes de la surface extérieure de la cuve.

Un perfectionnement du détecteur d'une citerne selon l'invention consiste à placer entre la surface extérieure de la cuve et la couche de sel une membrane conductrice de la chaleur mais isolante électriquement. Cette membrane permet de s'assurer de l'isolement électrique des électrodes par rapport à la surface extérieure de la cuve, tout en réalisant une conduction thermique qui assure que la couche de sel est à une température égale à celle de la surface extérieure de la cuve.

Un perfectionnement du détecteur consiste à placer une pièce de fixation amovible, notamment un aimant, entre cette membrane et la surface extérieure de la cuve.

Grâce à cet aimant, le détecteur peut être monté aisément sous la cuve simplement en plaquant l'aimant qui supporte alors le détecteur contre la cuve. De même, on peut retirer simplement le détecteur de la cuve en éloignant l'aimant de la citerne.

Dans la pratique, il convient d'avoir accès aisément aux données fournies par le détecteur, alors pourtant que la détection est réalisée à l'intérieur de l'enveloppe étanche, de préférence sous le fond même de la cuve, elle-même enterrée.

Un perfectionnement de l'invention permet de résoudre ce problème en plaçant le moyen d'information à l'extérieur de l'enceinte étanche, et de manière qu'il soit aisément accessible par l'utilisateur.

Afin d'améliorer encore plus la résolution du détecteur, c'est-à-dire la quantité minimale d'eau nécessaire pour qu'un courant soit visible sur le moyen de détection du passage de courant, on adjoint, selon un perfectionnement de l'invention, au circuit électrique un moyen destiné à amplifier le courant qui passe par les électrodes lorsque le sel est devenu conducteur.

Selon un mode de réalisation de l'invention, ce moyen d'amplification consiste en un transistor (par exemple de type 2 N 222), dont la base est reliée à une électrode, tandis que la branche constituée de source de courant électrique et du moyen de détection du passage du courant est montée entre le collecteur et l'émetteur, le collecteur étant également relié à l'autre électrode. Ainsi lorsqu'un courant entre dans la base du transistor, il en ressort amplifié par l'émetteur avant de passer dans le détecteur de passage de courant.

Selon un perfectionnement de l'invention, le détecteur est muni d'un moyen de mémorisation du fait que du courant est passé entre les électrodes et que, donc, de l'eau est apparue sur la surface extérieure de la cuve.

Cette mémorisation permet à l'utilisateur de la citerne d'être informé que de l'eau est apparue à un moment donné sans avoir à consulter à ce moment précis le moyen d'information. Ce moyen de mémorisation est particulièrement utile dans les cas où le détecteur détecte une apparition d'eau alors que l'utilisateur n'est pas en train de s'informer et que, avant que l'utilisateur ne vienne s'informer, cette eau disparaît.

Le circuit électrique d'un mode de réalisation d'un détecteur muni d'un tel moyen de mémorisation est constitué d'un tripôle, par exemple un transistor, ayant la propriété que, si du courant entre par un premier pôle, le dipôle constitué des deuxième et troisième pôles est conducteur et que, si du courant n'entre pas par le premier pôle, le dipôle n'est pas conducteur, le premier pôle étant relié à une électrode, un pôle parmi les deuxième et troisième pôles étant relié à l'autre électrode, d'un interrupteur de mémorisation commandé par le courant, initialement en position fermée et qui passe en position ouverte lorsque du courant sort du pôle du tripole qui n'est pas relié à une électrode, d'une source de courant électrique et d'un moyen de détection de passage de courant, le pôle du tripôle non relié à une électrode étant relié à une des bornes de source de courant électrique et à une des bornes de l'interrupteur, l'autre borne de l'interrupteur étant reliée au moyen de détection du passage de courant, lui-même relié au pôle du dipôle qui est relié à une électrode et à l'autre borne de source de courant électrique.

Dans ce montage, le moyen de mémorisation est constitué de l'interrupteur de mémorisation commandé par le courant. La lampe servant de moyen de détection du passage du courant reste alors allumée en permanence, en étant alimentée par la source de courant électrique.

Dans la pratique, la source de courant électrique va se décharger rapidement, si on la laisse débiter ainsi en permanence. Si cette décharge a lieu avant que l'utilisateur vienne s'informer, la lampe se sera éteinte du fait de cette décharge et il en conclura à tort que la citerne fonctionne convenablement.

Afin de protéger la source de courant électrique d'une telle décharge, un perfectionnement de l'invention consiste à placer dans le circuit électrique un moyen destiné à empêcher la source de courant électrique de débiter du courant dès après qu'un courant a été détecté.

Un mode de réalisation du circuit électrique muni d'un tel moyen est le suivant : il est constitué d'un tripôle, par exemple un transistor, ayant la propriété que, si du courant entre par un premier pôle, le dipôle constitué des deuxième et troisième pôles est conducteur et que, si du courant n'entre pas par le premier pôle, le dipôle n'est pas conducteur, le premier pôle étant relié à une électrode, un pôle parmi les deuxième et troisième pôles étant relié à l'autre électrode, d'un interrupteur de mémorisation excité par le courant, initialement en position fermée et qui passe en position ouverte lorsque du courant sort du pôle du tripole qui n'est pas relié à une électrode, d'une source de courant électrique et d'un moyen de détection de passage de courant, le pôle du tripôle non relié à une électrode étant relié à une des bornes de source de courant électrique et à une des bornes de l'interrupteur, l'autre borne de l'interrupteur étant reliée au moyen de détection du passage de courant, lui-même relié au pôle du dipôle qui est relié à une électrode et à l'autre borne de source de courant électrique., un interrupteur de non débit à deux positions ouverte et fermée, initialement en position fermée et qui passe en position ouverte lorsqu'il est excité par du courant étant monté entre le pôle du tripôle qui n'est pas relié à une électrode et l'entrée du premier interrupteur à deux positions commandé par le courant et un interrupteur manuel commandant le passage du courant dans le moyen de détection du passage de courant.

Grâce à ce montage, la source de courant électrique ne débite du courant que pendant le très court laps de temps entre le moment où le sel devient conducteur et le moment où l'interrupteur de mémorisation s'ouvre.

L'avantage de ce montage est qu'après qu'une condensation d'eau a été détectée, la source de courant ne débite plus de courant mais l'utilisateur est néanmoins informé que de l'eau est apparue pendant son absence. En effet, l'interrupteur de mémorisation commandé par le courant s'est bien fermé et lorsque l'utilisateur ferme l'interrupteur manuel, la source de courant électrique redébite dans le moyen de détection de passage de courant et avertit l'utilisateur que du courant est passé dans le circuit pendant son absence.

Un autre mode de réalisation consiste à remplacer les deux interrupteurs excités par le courant par un relais bistable à deux branches, chaque branche ayant deux positions ouverte et fermée, la première étant initialement en position fermée et la seconde initialement en position ouverte et la première s'ouvrant et la seconde se fermant lorsque le courant entre dans le relais bistable.

Ainsi, lorsque le sel devient conducteur, un courant entre dans l'interrupteur de mémorisation excité par le courant (la branche du relais), qui est initialement fermé, ce qui a pour effet de l'ouvrir, tandis que le second (la seconde) se ferme.

Il peut également arriver que le détecteur se détache de la surface extérieure de la cuve.

Un perfectionnement du détecteur de la citeme selon l'invention consiste à munir ce détecteur d'un moyen indicateur du fait qu'il s'est détaché de la cuve.

Un mode de réalisation d'un détecteur muni d'un tel moyen indicateur comprend comme moyen indicateur un interrupteur à ressort bandé entre la surface extérieure de la cuve et une butée solidaire du détecteur, et des conducteurs le reliant à chaque électrode.

Ainsi lorsque le détecteur et sa butée solidaire s'éloignent de la surface de la cuve, l'interrupteur à ressort se détend et se ferme pour laisser passer le courant. Tout se passe ensuite comme si le détecteur avait détecté une apparition d'eau et l'utilisateur est averti par le moyen de détection du passage du courant qu'une anomalie est apparue dans le détecteur.

Lorsque le détecteur ne détecte rien, ce peut être parce que il n'apparaît pas de condensation d'eau mais aussi parce que le moyen d'information est défectueux.

Afin de fournir à l'utilisateur un signal l'avertissant d'une anomalie du moyen d'information, un perfectionnement de la citerne selon l'invention consiste en deux conducteurs reliés à l'extérieur de l'enveloppe étanche par un interrupteur de vérification et reliés à l'intérieur de l'enveloppe chacun à l'une des électrodes. Cela permet, lorsqu'on ferme l'interrupteur de vérification, de faire comme si de l'eau apparaissait sur la surface extérieure de la cuve et de vérifier ainsi que le moyen d'information fonctionne normalement. Si tel n'est pas le cas, l'utilisateur sait, qu'une anomalie existe et qu'une intervention est nécessaire.

Une variante d'une citerne comprenant un dispositif pour avertir l'utilisateur qu'une anomalie entrave son bon fonctionnement consiste en un détecteur qui comprend un sel hygroscopique, deux électrodes reliées entre elles par une résistance, de valeur inférieure à celle constituée par le sel non dissous est supérieure à celle constituée par le sel dissous, et de préférence une gaine en matériau de synthèse choisi pour ses propriétés de forte absorption d'eau et faible désorption d'eau. Un exemple non limitatif d'un matériau adéquat est un polyamide (type nylon).

Lorsque des condensations se produisent sur la surface extérieure de la cuve de la citerne, l'eau condensée pénètre avec facilité le matériau de la gaine et modifie la résistance du sel hygroscopique en l'amenant à une valeur inférieure à celle de la résistance placée entre les deux électrodes. De cette façon, la constatation de la présence de condensation peut être vérifiée par une simple mesure de résistance.

Trois cas peuvent se présenter :
1°) la valeur de la résistance globale est supérieure à celle de la résistance mise en série avec les électrodes : l'appareil est en défaut par suite d'une rupture de circuit,
2°) la valeur de la résistance globale correspond à celle de la résistance mise en série avec les électrodes : le capteur fonctionne et il n'y a pas eu de condensation ;
3°) la valeur de la résistance globale est inférieure à celle de la résistance mise en série : il y a eu condensation.

Un simple ohmètre permet le contrôle à la fois du circuit et de la présence de condensation.

Au dessin annexé donné uniquement à titre d'exemple,
la figure 1 est une vue schématique en coupe d'une citerne selon l'invention.
la figure 2 est une vue schématique en coupe d'un mode de réalisation préféré du détecteur selon l'invention.
la figure 3 est un schéma d'un mode de réalisation préféré du circuit électrique de la citerne selon l'invention, correspondant à la partie qui est à l'extérieur de l'enveloppe étanche.
la figure 4 est un schéma d'un autre mode de réalisation possible du détecteur.

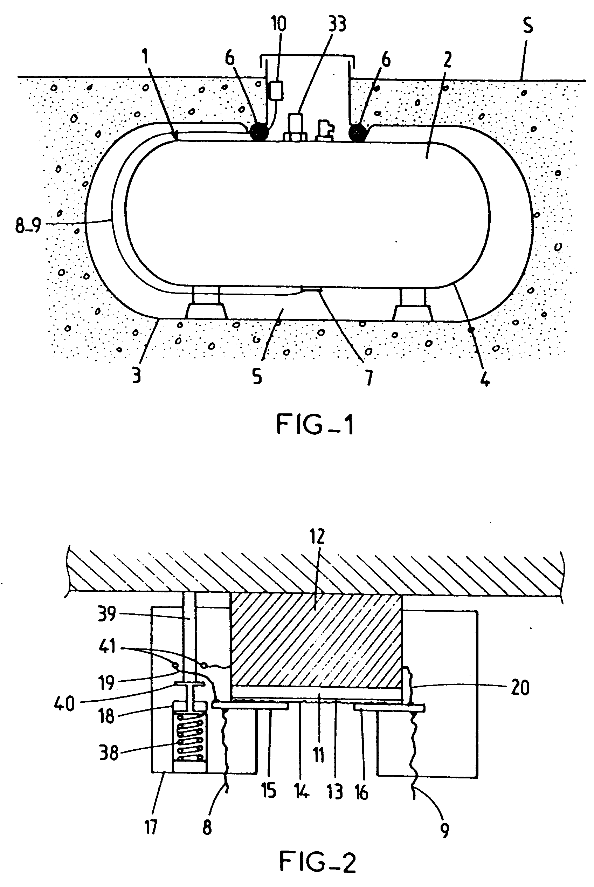

La citerne représentée à la figure 1 est désignée dans son ensemble par la référence 1. Elle comporte une cuve 2 en acier entourée d'une enveloppe 3 en un matériau non corrodable, par exemple une matière plastique, tel que le polyéthylène, qui définit avec la surface extérieure 4 de la cuve 2 une enceinte 5 étanche dont l'étanchéité est assurée par des joints 6 d'étanchéité. Une entrée (non représentée), munie d'un bouchon permet d'introduire du gaz ou du fluide anhydre dans l'enceinte 5.

Sous le fond de la cuve 2, est monté un détecteur 7 de l'apparition d'eau relié par des conducteurs 8,9 à un moyen d'information 10 permettant de savoir si le détecteur 7 a détecté une condensation. Ce moyen d'information 10 est aisément accessible à l'utilisateur de la citerne en étant proche de la surface du sol S.

Le détecteur (figure 2) est constitué d'une membrane 11, isolante électriquement et conductrice thermiquement, par exemple SILPAD 400 fabriqué par la société BERGQUIST, dont l'une des faces est en contact permanent avec la surface extérieure 4 de la cuve par l'intermédiaire d'un aimant 12, conducteur de la chaleur, tandis que l'autre face 13 est recouverte d'une couche 14 de sel hygroscopique (LiCl, NaCl, ou analogue), dont la conductibilité en solution est beaucoup plus grande que sous forme cristallisée. Dans cette couche sont montées deux électrodes 15, 16 en un matériau inoxydable (or, platine ou analogue), disposées en contact intime avec la face 13 de la membrane 11. Un boîtier 17 plastique recouvre la partie intérieure à l'enceinte du détecteur pour protéger la couche de sel hygroscopique et peut servir de réserve de sel hygroscopique.

Un interrupteur 18 à ressort a son ressort 38 monté comprimé entre le fond du boîtier 17 formant butée et la surface extérieure 4 de la cuve avec interposition d'un poussoir 39 muni d'une palette 40. Lorsque le ressort 38 se détend parce que le fond 17 s'éloigne de la surface 4, la palette 40 conductrice vient en contact avec deux bornes 41, et est relié par deux conducteurs 19,20 à chacune des électrodes. Deux conducteurs 8,9 relient les électrodes au moyen 10 d'information après avoir traversé l'enveloppe étanche 3 par des orifices étanches.

Ce moyen 10 d'information comprend un circuit électrique 21 branché aux bornes des conducteurs 8,9 issus des électrodes.

Le conducteur 8 est relié à la base d'un transistor 22, dont l'émetteur est relié à une première branche 23a d'un relais bistable 23 à deux positions NF et NO. Cette branche de relais bistable 23a est reliée par un fil électrique d'une part à une borne d'une source de courant électrique 24 et d'autre part à la seconde branche du relais bistable 23b à deux positions NF et NO. Cette dernière est reliée par un fil électrique à une lampe 25, servant de moyen de détection du passage du courant ,elle-même reliée à un interrupteur 26 manuel relié lui-même au collecteur du transistor 20. La deuxième borne de source de courant électrique 24 est également reliée au collecteur du transistor 22. Une branche comprenant un interrupteur 27 de remise à zéro et une bobine 28 auxiliaire est montée entre la borne de source de courant électrique qui est également reliée au relais bistable 23. La bobine 29 fait partie du relais bistable 23.

Deux autres conducteurs 30,31 sont montés aux bornes des électrodes 15,16 et reliés, après avoir traversé de façon étanche l'enveloppe 3, par un interrupteur 32 de vérification.

On introduit par une entrée 33 le liquide ou gaz à stocker dans la cuve de la citerne, par exemple un gaz de pétrole liquéfié et un gaz ou un fluide anhydre dans l'enceinte 5 étanche. L'étanchéité de l'enceinte 5 permet de s'assurer que la surface extérieure 4 de la cuve 2 n'est jamais soumise à une atmosphère humide, ce qui la protège contre la corrosion. Si néanmoins, de l'humidité parvient à s'introduire dans l'enceinte 5, il va s'ensuivre, en raison de la température basse des gaz de pétrole liquéfié qui se trouvent dans la partie basse de l'intérieur de la cuve, que de l'eau de condensation apparaît sur la surface extérieure de la cuve, et en particulier dans le fond de la cuve où la température est la plus basse. Cette apparition d'eau est détectée par le détecteur 7 d'apparition d'eau. Par l'intermédiaire des conducteurs 8,9, l'information que de l'eau a été détectée est transmise à la lampe 25 qui permet à l'utilisateur de savoir qu'une intervention est nécessaire pour éviter une corrosion à venir de la cuve 2.

Dans les conditions normales (pas d'apparition d'eau), la conductibilité du sel hygroscopique entre les deux électrodes 15,16 est très faible et aucun courant ne passe dans les conducteurs 8,9 d'autant que deux résistances 34,35 de forte valeur sont montées en série respectivement avec chaque électrode.

Si de l'eau apparaît sur la couche 14 de sel du détecteur 7, sa conductibilité augmente fortement et il s'ensuit un passage de courant qui entre dans la base du transistor 22. Le courant sort amplifié de l'émetteur du transistor et entre dans la première branche 23A à deux états bistables du relais bistable qui passe alors de l'état NF (fermé) qui laisse passer le courant, à l'état NO (ouvert) qui empêche le courant de passer. Le courant qui vient de passer dans la première branche du relais bistable entre également dans la seconde branche 23B du relais bistable qui passe elle de l'état NO à l'état NF. Le circuit constitué de la source de courant électrique 24, de la lampe 25 et de l'interrupteur 26 manuel est alors fermé et du courant passe dans la lampe 25 si l'interrupteur 26 est fermé. L'utilisateur, en fermant cet interrupteur 26, est alors informé :
- si la lampe s'allume, que du courant est passé entre les électrodes depuis la dernière fois que le relais bistable 23 se trouvait dans sa position normale (branche A fermée, branche B ouverte), (en général la dernière visite) ;
- si la lampe ne s'allume pas et s'allume lorsqu'il ferme l'interrupteur 32 de vérification qu'aucun courant n'a circulé depuis la dernière fois que le relais bistable a été mis en position normale.

L'interrupteur 32 court-circuite les électrodes et permet au courant de passer entre elles. En le fermant, l'utilisateur peut alors vérifier que le moyen 10 d'information fonctionne normalement, si la lampe s'allume. Si celle-ci ne s'allume pas, c'est qu'un défaut existe dans le moyen 10 d'information (câble défectueux, composants défectueux, etc ...) et une intervention y est nécessaire.

Une fois ces contrôles réalisés, l'utilisateur réouvre l'interrupteur 26 manuel et ferme pendant un bref instant l'interrupteur 27 de remise à zéro qui réenclenche le relais bistable dans sa position normale en alimentant la bobine 29 auxiliaire du relais.

Grâce à l'interrupteur 26 et à la branche 23a, la source de courant électrique ne débite pas pendant tout le temps entre l'instant où de l'eau est apparu et l'instant où l'utilisateur procédé à ses opérations. Cela permet dès lors de s'assurer d'une durée de vie très longue de la pile.

Lorsque l'utilisateur ferme l'interrupteur 26 et que la lampe s'allume, cela est le signe d'une anomalie. Une condensation a pu se produire, comme cela a été décrit ci-dessus. Une autre cause est que le détecteur 7 s'est détaché de la surface de la cuve 2. En effet, si cela vient à se produire, l'interrupteur 18 à ressort a son ressort qui se décomprime amenant ainsi l'interrupteur en position fermée. Du courant passe alors entre les deux électrodes et celui-ci met la lampe 25 sous tension de la même manière que si une condensation était apparue.

Ainsi, lorsqu'en appuyant sur l'interrupteur 26, l'utilisateur voit la lampe 25 s'allumer, il sait qu'une intervention est nécessaire dans l'enceinte étanche pour soit déshumidifier l'enceinte, soit pour refixer le détecteur à la cuve.

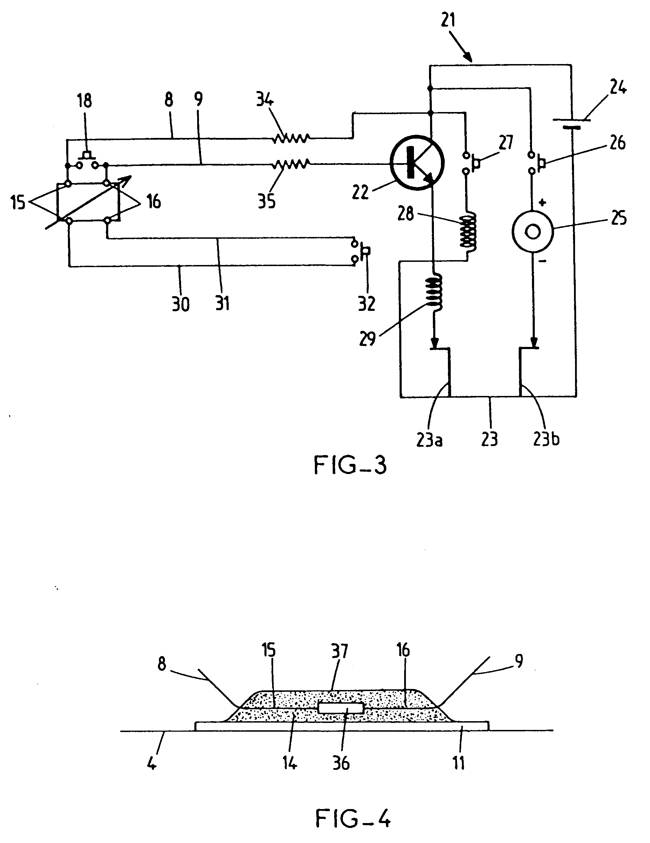

A la figure 4, une résistance 36 est montée entre les électrodes (15,16) dans le sel hygroscopique 14 à l'intérieur d'une gaine 37 en un matériau fortement absorbeur d'eau et à faible désorption.

Lorsque des condensations se produisent sur la surface extérieure de la cuve de la citerne, l'eau condensée pénètre avec facilité le matériau de la gaine et modifie la résistance du sel hygroscopique en l'amenant à une valeur inférieure à celle de la résistance 36. De cette façon, la constatation de la présence de condensation peut être vérifiée par une simple mesure de résistance.

Trois cas peuvent se présenter :
1°) la valeur de la résistance globale est supérieure à celle de la résistance 36 : le détecteur 7 est en défaut par suite d'une rupture de circuit, etc ...
2°) la valeur de la résistance globale correspond à celle de la résistance 36 : le détecteur 7 fonctionne et il n'y a pas eu de condensation.
3°) la valeur de la résistance globale est inférieure à celle de la résistance 36 : il y a eu condensation.

## Revendications

1. Procédé pour prévenir la corrosion d'une cuve (2) en un matériau corrodable et qui a un fond ayant une surface extérieure (4), caractérisé en ce qu'il consiste à détecter l'apparition d'eau qui se condense à la surface extérieure (4) du fond de la cuve.

2. Procédé selon la revendication 1, caractérisé en ce qu'il consiste à mettre la surface extérieure (4) du fond de la cuve dans une atmosphère anhydre.

3. Citerne (1) comprenant une cuve (2) en un matériau corrodable, destinée à contenir un fluide autre que de l'eau, et une enveloppe (3) entourant au moins une partie de la surface extérieure (4) du fond de la cuve, caractérisée en ce que l'enveloppe (3) définit, entre elle et la partie de la surface extérieure (4) du fond de la cuve, une enceinte (5) étanche, et un détecteur (7) de la présence d'eau est monté sur la surface extérieure (4) du fond de la cuve.

4. Citerne selon la revendication 3, caractérisée en ce que l'enceinte (5) est emplie d'un fluide anhydre.

5. Citerne selon la revendication 3 ou 4, caractérisée en ce que le détecteur (7) est fixé à la surface extérieure (4) du fond de la cuve par une pièce (12) de fixation amovible, de préférence un aimant.

6. Citerne selon la revendication 3, 4 ou 5, caractérisée en ce que le détecteur (7) coopère avec un moyen d'information (10) destiné à informer du fait qu'il détecte une apparition d'eau.

7. Citerne selon la revendication 6, caractérisée en ce que le détecteur (7) est constitué d'une couche (14) de sel hygroscopique, dont la conductibilité en solution est beaucoup plus grande que sous la forme cristallisée, en relation d'échange thermique avec la surface extérieure (4) de la cuve, de deux électrodes (15, 16) à distance l'une de l'autre, chacune étant en contact de la couche de sel hygroscopique, et de deux conducteurs (8,9), une membrane (11) en un matérieau isolant électriquement mais conducteur thermiquement étant de préférence fixée sur la partie de la surface extérieure (13) de la cuve, entre celle-ci et la couche de sel (12), cette dernière étant de préférence fixée à la membrane, le moyen d'information étant constitué de préférence d'un circuit électrique (21), relié à chacune des électrodes (15,16) par des conducteurs (8,9) et comprenant une source de courant électrique (24) et un moyen (25) de détection de passage du courant.

8. Citerne selon la revendication 7, caractérisée en ce que le circuit électrique (21) comprend un moyen (22) d'amplification du courant électrique, de préférence un transistor.

9. Citerne selon l'une quelconque des revendications 6 à 8, caractérisée en ce que le le moyen d'information (10) comprend un moyen (23b) pour mémoriser le fait que le détecteur (7) a détecté une apparition d'eau.

10. Citerne selon la revendication 9, caractérisée en ce que le circuit (21) électrique du moyen d'information comprend, comme moyen de mémorisation un moyen (23b) pour mémoriser que du courant y est passe, le circuit électrique étant de préférence constitué d'un tripôle (22), par exemple un transistor, tel que si du courant entre par un premier pôle, le dipôle constitué des deuxième et troisième pôles est conducteur et que si aucun courant n'entre par le premier pôle, le dipôle n'est pas conducteur, dont le premier pôle est relié à une électrode (16), un pôle parmi les deuxième et troisième pôles est relié à l'autre électrode (15), d'un interrupteur (23b) de mémorisation à deux positions fermée et ouverte, qui laisse et ne laisse pas respectivement passer le courant, initialement en position ouverte et qui passe en position fermée lorsqu'un courant sort du pôle du tripôle (22) qui n'est pas relié à une électrode, d'une source de courant électrique (24) et d'un moyen (25) de détection du passage du courant, le pôle du tripôle non relié à une électrode étant relié à une des bornes de la source de courant électrique (24) et à une des bornes de l'interrupteur (23b), l'autre borne de l'interrupteur (23b) étant relié au moyen (25) de détection du passage de courant, lui-même relié au pôle du dipôle qui est relié à une électrode et à l'autre borne de la source de courant électrique.

11. Citerne selon l'une quelconque des revendications, 7,8 ou 10 caractérisée en ce qu'un moyen (23a et 26) destiné à empêcher la source (24) de courant électrique de débiter du courant après que le détecteur a détecté une apparition est monté sur le circuit électrique.

12. Citerne selon la revendication 11, caractérisée en ce que le circuit électrique de la revendication 10 comprend également un second interrupteur (23a) de non débit à deux positions, commandable par le courant, initialement en position fermée et passant en position ouverte lorsque un courant sort du pôle du tripôle (27) qui n'est pas relié à une électrode, monté entre le pôle du tripôle qui n'est pas relié à une électrode et l'entrée du premier interrupteur à deux positions (23a) et un interrupteur (26) commandant le passage du courant dans le moyen (25) de détection du passage de courant, les deux interrupteurs commandables par le courant pouvant être de préférence remplacés par un relais (23) bistable à deux branches (23a, 23b), chacune ayant deux états stables, ouvert et fermé, la première étant initialement en position fermée et la seconde en position ouverte.

13. Citerne selon l'une quelconque des revendications 6 à 12, caractérisée par un moyen (32) de vérification du bon fonctionnement du moyen d'information (10).

14. Citerne selon la revendication 13, caractérisée en ce que le moyen de vérification est constitué de deux conducteurs (30,31) partant chacun d'une électrode et d'un interrupteur (32) de vérification monté entre les deux conducteurs ou d'une résistance (36) montée en série entre les électrodes.

15. Citerne selon l'une quelconque des revendications 4 à 14, caractérisée par un moyen (18) indiquant que le détecteur (7) n'est plus en relation d'échange thermique avec la partie de la surface extérieure (4) de la cuve, ce moyen (18) étant constitué de préférence d'un interrupteur, relié aux électrodes par deux conducteurs (19,20), qui se ferme lorsque le détecteur (7) s éloigne de la partie de la surface extérieure de la cuve..

16. Citerne à cuve enterrée selon l'une quelconque des revendications 4 à 15, caractérisée en ce que le moyen d'information (10) et/ou le moyen (23b) de mémorisation et/ou le moyen (32) de vérification du bon état de fonctionnement du détecteur n'est/ne sont pas enterré(s).

17. Détecteur (7) destiné à être utilisé dans une citerne suivant l'une des revendications 3 à 16, caractérisé en ce qu'il est constitué d'une couche (14) de sel hygroscopique, dont la conductibilité en solution est beaucoup plus grande que sous la forme cristallisée, en relation d'échange thermique avec la surface extérieure (4) de la cuve, de deux électrodes (15, 16) à distance l'une de l'autre, chacune étant en contact de la couche de sel hygroscopique, et de deux conducteurs (8,9), une membrane (11) en un matériau isolant électriquement mais conducteur thermiquement étant de préférence fixée sur la partie de la surface extérieure (13) de la cuve, entre celle-ci et la couche de sel (12), cette dernière étant de préférence fixée à la membrane, le moyen d'information étant constitué de préférence d'un circuit électrique (21), relié à chacune des électrodes (15,16) par des conducteurs (8,9) et comprenant une source de courant électrique (24) et un moyen (25) de détection de passage du courant.

## Claims

1. Method for preventing corrosion of a vessel (2), made of a corrodible material and which has a bottom having an outer surface (4), which comprises detecting the appearance of water which condenses at the outer surface (4) of the bottom of the vessel.

2. Method according to claim 1, which comprises placing the outer surface (4) of the bottom of the vessel in an anhydrous atmosphere.

3. Storage tank (1) comprising a vessel (2) made of a corrodible material for containing a fluid other than water, in which a casing (3) surrounds at least a part of the outer surface (4) of the bottom of the vessel, characterized in that the casing (3) defines a leaktight enclosure (5) between the outer surface (4) of the bottom and the vessel, and a detector (7) of the presence of water is mounted on the outer surface (4) of the bottom of the vessel.

4. Storage tank according to claim 3, characterized in that the enclosure (5) is filled with an anhydrous fluid.

5. Storage tank according to claim 3, characterized in that the detector (7) is fixed to the outer surface (4) of the bottom of the vessel by a removable fixing piece (12) preferably by a magnet.

6. Storage tank according to claim 3, 4 or 5, characterized in that the detector (7) works together with an information means (10) intended to give information of the fact that it is detecting the appearance of water.

7. Storage tank according to claim 6, in which the detector (7) comprises a layer (14) of hygroscopic salt, the conductivity of which in solution is much greater than in crystallized form, in a heat-exchange relation with the outer surface (4) of the bottom of the vessel, two electrodes (15,16) at a distance from one another, each being in contact with the layer of hygroscopic salt, and two conductors (8,9) in which a membrane (11) made of an electrically insulating but thermally conducting material is fixed to the part of the outer surface (13) of the vessel, between the latter and the layer (12) of salt, this layer being fixed preferably to the membrane, and in which the information means comprises an electrical circuit (21), connected to each of the electrodes (15,16) by the conductors (8,9), and comprising an electric current source (24) and a means (25) of detecting the passage of the current.

8. Storage tank according to claim 7, characterized in that the electrical circuit (21) comprises a means (22) of amplifying the electric current, preferably a transistor.

9. Storage tank according to anyone of claims 6 to 8, characterized in that the information means (10) comprises a means (23b) for memory-storage of the face that the detector (7) has detected an appearance of water.

10. Storage tank according to claim 9, characterized in that the electrical circuit (21) of the information means comprises, as memory-storage means, a means (23b) for remembering that current has passed therein, the electrical circuit consisting of a tripole (22), for instance a transistor, such that if current enters via a first pole, the dipole consisting of the second and third poles is conducting and that, if no current enters via the first pole, the bipole is not conducting, in which the first pole is linked to an electrode (16), one pole of the second and third poles is connected to the other electrode (15), of a memory-storage switch (23b) with two positions, closed and open, which allows and does not allow current to pass respectively, initially in open position and which passes to closed position when a current leaves the pole of the tripole (22) which is not connected to an electrode, of an electric current source (24) and of a means (25) of detecting the passage of the current, the pole of the tripole which is not linked to an electrode being connected to one of the terminals of the electric current source (24) and to one of the terminals of the switch (23b), the other terminal of the switch (23b) being connected to the means (25) of detecting the passage of current, itself connected to the pole of the dipole which is connected to an electrode and to the other terminal of the electric current source.

11. Storage tank according to anyone of claims 7, 8 or 10, characterized in that a means (23a and 26) for preventing the electric current source (24) from supplying current after the detector has detected an appearance is mounted on the electrical circuit.

12. Storage tank according to claim 11, characterized in that the electrical circuit of claim 10 also comprises a second non-supply, two-position switch (23a), controllable by the current, initially in closed position and passing to open position when a current leaves the pole of the tripole (27) which is not linked to an electrode, mounted between the pole of the tripole which is not connected to an electrode and the input of the first two-position switch (23a), and a switch (26) controlling the passage of the current in the means (25) of detecting the passage of current, the two switches controllable by the current possibly preferably being replaced by a bistable relay (23) with two branches (23a,23b), each having two stable states, open and closed, the first being initially in closed position and the second in open position.

13. Storage tank according to anyone of claims 6 to 12, characterized in that a means (32) is provided for verifying the correct operation of the information means (10).

14. Storage tank according to claim 13, characterized in that the verification means comprises two conductors (30,31) each starting from an electrode and of a verification switch (32) mounted between the two conductors, or a resistor (36) mounted in series between the electrodes.

15. Storage tank according to anyone of claims 4 to 14, characterized in that a means (18) is provided for indicating that the detector (7) is no longer in a heat-exchange relation with the part of the outer surface (4) of the vessel, the means indicating that the detector is no longer in a heat-exchange relation comprising preferably a switch, connected to the electrodes by two conductors (19,20), which is closed when the detector (7) moves away from the part of the outer surface of the vessel.

16. Storage tank with a buried vessel according to anyone of claims 4 to 15, characterized in that the information means (10) and/or the memory storage means (23b) and/or the means (32) of verifying the good operating condition of the detector is not buried.

17. Detector (7) to be used with a storage tank according to one of claims 3 to 16, characterized in that it comprises a layer (14) of hygroscopic salt, the conductivity of which in solution is much greater than in crystallized form, in heat-exchange relation with the outer surface (4) of the vessel, two electrodes (15,16) at a distance from one another, each being in contact with the layer of hygroscopic salt and two conductors (8,9), in which a membrane made of an electrically insulating but thermally conducting material is preferably fixed to the part of the outer surface (13) of the vessel between the latter and the layer (12) of salt, this layer being preferably fixed to the membrane, the information means comprises preferably an electrical circuit (21) connected to each of the electrodes (15,16) by the conductors (8,9), and comprising an electric current source (24) and a means (25) of detecting the passage of the current.

## Patentansprüche

1. Verfahren zum Korrosionsschutz eines Behälters (2) aus einem korrodierbaren Material, dessen Boden eine Außenfläche (4) hat, dadurch gekennzeichnet, daß die Entstehung von Kondenswasser auf der Außenfläche (4) des Behälterbodens festgestellt wird.

2. Verfahren nach Anspruch 1, dadurch gekennzeichnet, daß die Außenfläche (4) des Behälterbodens einer wasserfreien Atmosphäre ausgesetzt wird.

3. Tank (1), bestehend aus einem Behälter (2) aus einem korrodierbaren Material zur Aufnahme einer Flüssigkeit, ausgenommen Wasser, und einer Umhüllung (3), welche wenigstens einen Teil der Außenfläche (4) des Behälterbodens umgibt, dadurch gekennzeichnet, daß die Umhüllung (3) zwischen sich und dem Teil der Außenfläche (4) des Behälterbodens einen abgedichteten Raum (5) bildet und daß auf der Außenfläche (4) des Behälterbodens ein Detektor (7) angebracht ist, der das Vorhandensein von Wasser feststellt.

4. Tank nach Anspruch 3, dadurch gekennzeichnet, daß der Raum (5) von einem wasserfreien Fluid beaufschlagt ist.

5. Tank nach Anspruch 3 oder 4, dadurch gekennzeichnet, daß der Detektor (7) auf der Außenfläche (4) des Behälterbodens durch ein lösbares Befestigungsteil (12), vorzugsweise ein Magnet, befestigt ist.

6. Tank nach einem der Ansprüche 3, 4 oder 5, dadurch gekennzeichnet, daß der Detektor (7) mit einer Signaleinrichtung kooperiert, die anzeigt, wenn dieser eine Entwicklung von Wasser feststellt.

7. Tank nach Anspruch 6, dadurch gekennzeichnet, daß der Detektor (7) aus einer Schicht (14) aus einem hygroskopischen Salz, dessen Leitfähigkeit in gelöstem Zustand, abhängig vom Wärmeaustausch an der Behälteraußenfläche viel größer als in Kristallform ist und aus zwei mit Abstand zueinander angeordneten und mit der hygroskopischen Salzschicht sowie zwei Stromleitern (8,9) in Kontakt befindlichen Elektroden (15,16) sowie einer Membran (11) aus einem elektrisch isolierenden, doch wärmeleitenden Material besteht, die vorzugsweise zwischen dem Teil (12) auf der Außenfläche (13) des Behälters und der Salzschicht (12) angeordnet ist, wobei letztere vorzugsweise an der Membran befestigt ist und daß die Signaleinrichtung vorzugsweise aus einer elektrischen Schaltung (21), die mit den Elektroden (15,16) durch Stromleiter (8,9) verbunden ist und aus einem Mittel (25) zur Stromanzeige besteht.

8. Tank nach Anspruch 7, dadurch gekennzeichnet, daß die elektrische Schaltung (21) Mittel zur Verstärkung des elektrischen Stroms, vorzugsweise einen Transistor aufweist.

9. Tank nach einem der Ansprüche 6 bis 8, dadurch gekennzeichnet, daß die Signaleinrichtung (10) Mittel (23b) zum Speichern des Zustandes aufweist, in dem der Detektor (7) die Entwicklung von Wasser festgestellt hat.

10. Tank nach Anspruch 9, dadurch gekennzeichnet, daß die elektrische Schaltung (21) Mittel zur Signalverarbeitung aufweist und zwar als Mittel zum Speichern ein Mittel (23b), das einen Stromfluß speichert, daß die elektrische Schaltung vorzugsweise aus einem Tripol (22), z. B. einem Transistor, solcher Beschaffenheit besteht, daß bei einem durch einen ersten Pol fließenden Strom der aus dem zweiten und dritten Pol gebildete Dipol stromführend und bei stromlosen ersten Pol der Dipol nichtstromführend ist, wobei der erste Pol an eine Elektrode (16) und einer von dem zweiten oder dritten Pol an die andere Elektrode (15) angeschlossen ist, daß ein Schalter (23b) zur Festlegung einer geschlossenen und einer geöffneten Position vorhanden ist, in denen der Strom geleitet oder abgesperrt wird und der aus einer anfänglichen Offenstellung in die Schließstellung gelangt, wenn ein nicht mit einer Elektrode verbundener Pol des Tripols stromführend ist, daß eine elektrische Stromquelle (24) und ein Mittel (25) zur Stromanzeige vorgesehen ist, wobei ein nicht mit den Elektroden verbundene Pol des Tripols mit einem Anschlußpol der elektrischen Stromquelle (24) und der Anschlußklemme des Schalters (23b) und die andere Anschlußklemme des Schalters (23b) mit dem Mittel zur Stromanzeige verbunden ist, das weiterhin mit dem Pol des Dipols, der an eine Elektrode angeschlossen ist, und mit dem anderen Anschlußpol der elektrischen Stromquelle verbunden ist.

11. Tank nach einem der Ansprüche 7,8 oder 11, gekennzeichnet durch ein Mittel (23 und 26) zum Abschalten der elektrischen Stromquelle (24), nachdem der Detektor ein Ereignis aufgespürt hat und an den Stromkreis angeschlossen ist.

12. Tank nach Anspruch 11, dadurch gekennzeichnet, daß die elektrische Schaltung nach Anspruch 10 ebenfalls einen zweiten Schalter (23a) hat, der nicht zwei Positionen bildet, durch Strom steuerbar aus einer anfänglich geschlossenen Lage in eine geöffnete Lage übergeht, wenn ein Strom, der von dem Pol des Tripols ausgeht, der nicht mit einer Elektrode verbunden ist, den nicht mit der Elektrode verbundenen Pol des Tripols (27) an den Eingang des ersten Schalters mit zwei Positionen (23a) und an einen Schalter (26) schaltet, der den Strom in das Mittel (25) zur Stromanzeige steuert, wobei die beiden durch Strom steuerbaren Schalter vorzugsweise durch ein bistabiles Relais mit zwei Zweigen (23a, 23b) ersetzt werden, das zwei stabile Stufen, offen und geschlossen, hat, wobei der erste anfänglich in der geschlossenen Lage und der zweite in der offenen Lage ist.

13. Tank nach einem der Ansprüche 6 bis 9, gekennzeichnet durch ein Mittel (32) zur Kontrolle der Funktionsfähigkeit der Signaleinrichtung (10).

14. Tank nach Anspruch 13, dadurch gekennzeichnet, daß das Mittel zur Kontrolle aus zwei Leitern (30,31) besteht, von denen jeder eine Elektrode mit dem Kontrollschalter (32) verbindet, der zwischen beide Leiter oder einen Widerstand (36) geschaltet ist, der in Serie zwischen die Elektroden geschaltet ist.

15. Tank nach einem der Ansprüche 4 bis 14, gekennzeichnet durch Mittel (18) zur Anzeige, wenn der Detektor (7) nicht mehr in einem Wärmeaustauschverhältnis mit der Außenfläche (4) des Behälters steht, wobei die Mittel vorzugsweise aus einem Schalter bestehen, der mit den Elektroden durch zwei Leiter (19,20) verbunden ist und schließt, wenn der Detektor (7) sich von der Außenfläche des Behälters absetzt.

16. Tank mit erdverlegtem Behälter nach einem der Ansprüche 4 bis 15, dadurch gekennzeichnet, daß die Signaleinrichtung (10) und/oder die Mittel (23b) zum Speichern und/oder die Mittel (32) zur Anzeige für einen guten Betriebszustand des Detektors nicht erdverlegt sind.

17. Detektor zur Verwendung in einem Tank nach einem der Ansprüche 3 bis 16, dadurch gekennzeichnet, daß er aus einer Schicht (14) aus einem hygroskopischen Salz, dessen Leitfähigkeit im gelösten Zustand, abhängig vom Wärmeaustausch an der Behälteraußenfläche, viel größer ist als in Kristallform, aus zwei mit Abstand zueinander angeordnete Elektroden (15,16) die sich mit der hygroskopischen Salzschicht in Kontakt befinden und zwei Stromleiter (8,9) haben und aus einer Membran (11) aus einem elektrisch isolierenden, doch wärmeleitenden Material besteht, die vorzugsweise zwischen dem Teil (12) auf der Außenfläche (13) des Behälters und der Salzschicht (14) angeordnet ist, wobei letztere vorzugsweise an der Membran befestigt ist und daß die Signaleinrichtung vorzugsweise aus einer elektrischen Schaltung (21), die mit den Elektroden (15,16) durch die Stromleiter (8,9) verbunden ist und aus einem Mittel (25) zur Stromanzeige besteht.
